# EUROPÄISCHE PATENTSCHRIFT

(11) **EP 4 505 860 B1**
(45) Veröffentlichungstag und Bekanntmachung des Hinweises auf die Patenterteilung: **18.03.2026**
(21) Anmeldenummer: 24182855.7
(22) Anmeldetag: 18.06.2024
(51) Int. Cl.: A01D 41/14, A01D 45/02, A01D 43/08

(54) **MAISPFLÜCKER UND DAMIT AUSGESTATTETE LANDMASCHINE**
CORN HEADER AND AGRICULTURAL MACHINE EQUIPPED WITH SAME
CUEILLEUR À MAÏS ET MACHINE AGRICOLE ÉQUIPÉE AVEC CELUI-CI

(30) Priorität: 06.08.2023 DE 102023120835
(43) Veröffentlichungstag der Anmeldung: 12.02.2025
(73) Patentinhaber: CLAAS Industrietechnik GmbH, 33106 Paderborn (DE)
(72) Erfinder: Varga-Dudas, Tibor Zsolt, 5600 Bekescsaba (HU); Schulte, Michael, 33129 Delbrück (DE); Esses, Sándor István, 5008 Szolnok (HU); Herter, Felix, 88239 Wangen (DE); Knierbein, Claudius, 59510 Lippetal (DE); Zeuner, Maik, 33719 Bielefeld (DE); Schwaer, Christian, 48231 Warendorf (DE)
(74) Vertreter: CLAAS Gruppe

(56) Entgegenhaltungen:
- EP-A1- 2 995 188
- EP-A2- 1 466 518
- EP-B2- 2 404 496
- DE-A1- 102012 014 087

## Beschreibung

Die vorliegende Erfindung betrifft einen Maispflücker, der, typischerweise als Erntevorsatz oder Teil eines Erntevorsatzes einer fahrbaren Landmaschine, dazu dient, Maisstängel bodennah abzuschneiden und die Kolben von ihnen abzutrennen. Ein solcher Maispflücker und eine damit ausgestattete Landmaschine sind aus EP 2 936 963 B1 bekannt.

Dieser herkömmliche Maispflücker umfasst mehrere Reiheneinheiten, die in Breitenrichtung des Maispflückers verteilt in einem Abstand angeordnet sind, der dem Reihenabstand eines auf einem Feld zu erntenden Maisbestandes entspricht, so dass, wenn die Landmaschine in Richtung der Reihen über das Feld fährt, jede Reiheneinheit nacheinander die Stängel einer Reihe erfasst und abschneidet. Jede Reiheneinheit umfasst eine Pflückeinheit mit zwei einen Pflückspalt bildenden Pflückwalzen. Indem die Pflückwalzen einen abgeschnittenen Stängel durch den Pflückspalt ziehen, werden die Kolben abgestreift; der von den Kolben befreite Stängel wird von einer unter der Pflückeinheit angeordneten Häckseleinheit zerkleinert, und das dabei erhaltene Häckselgut wird auf dem Feld verteilt.

An entgegengesetzten Enden einer Rückseite des Maispflückers sind ein erster Antriebsanschluss und ein zweiter Antriebsanschluss vorgesehen, die im Betrieb mit einem Motor einer Basiseinheit der Landmaschine trieblich verbunden sind. Einer der Antriebsanschlüsse treibt über eine gemeinsame, sich in Querrichtung des Maispflückers erstreckende Pflückerabtriebswelle die Pflückeinheiten an, der andere über eine entsprechende Häckselabtriebswelle die Häckseleinheiten.

Indem so Pflück- und Häckseleinheiten getrennt voneinander angetrieben werden, können zwar - sofern die Basiseinheit ein geeignetes Getriebe zwischen dem Motor und mit den Antriebsanschlüssen des Maispflückers gekoppelten Abtriebsanschlüssen aufweist - unterschiedliche Drehzahlverhältnisse zwischen Pflück- und Häckseleinheiten eingestellt werden, doch ist dies mit beträchtlichem Kostenaufwand, Gewicht und Platzbedarf verbunden, da auf Seiten des Maispflückers zwei getrennte Antriebsstränge implementiert werden müssen; außerdem erschweren die zwei voneinander beabstandeten Abtriebsanschlüsse das Ankoppeln des Maispflückers an die Basiseinheit und die Verwendung von Maispflückern unterschiedlicher Breite an einer gleichen Basiseinheit. Hinzu kommt, dass die Anforderungen an die Torsionssteifigkeit der Abtriebswellen immer größer werden, je größer die Arbeitsbreite des Maispflückers sein soll. Wenn je nach Arbeitsbreite Abtriebswellen unterschiedlicher Stärke zum Einsatz kommen, so verkompliziert dies erheblich die Fertigungslogistik. Wenn Wellen von gleicher Stärke unabhängig von der Arbeitsbreite verwendet werden, so gleiche, was dazu führt, dass das Gewicht des Maispflückers mehr als linear mit der Arbeitsbreite zunimmt.
Das Dokument DE 10 2012 014 087 A1 offenbart eine Pflückeinheit, einen Erntevorsatz und eine Erntemaschine für Mais oder dergleichen.
Das Dokument EP 2 995 188 A1 offenbart eine Zapfwellenantriebseinheit für ein Maisvorsatzgerät einer landwirtschaftlichen Erntemaschine.

Eine Aufgabe der Erfindung ist, einen Aufbau für einen Maispflücker anzugeben, mit dem sich verschiedene Modelle mit unterschiedlichen Arbeitsbreiten, insbesondere solche mit großen Arbeitsbreiten, einfach und kostengünstig realisieren lassen.

Die Aufgabe wird einem Aspekt der Erfindung zufolge gelöst, indem bei einem Maispflücker mit mehreren zwischen einer ersten Seitenwand und einer gegenüberliegenden zweiten Seitenwand des Maispflückers verteilten Reiheneinheiten, wobei die Reiheneinheit eine Pflückeinheit, in der zwei Pflückwalzen einen Pflückspalt begrenzen, und eine Häckseleinheit umfasst, die unter der Pflückeinheit angeordnet ist, um einen durch den Pflückspalt hindurchgezogenen Halm zu häckseln, unter den Pflückeinheiten solche, die zu der ersten Seitenwand benachbart sind, mit einer gemeinsamen ersten Pflückerabtriebswelle gekoppelt sind, und solche, die zu der zweiten Seitenwand benachbart sind, mit einer gemeinsamen zweiten Pflückerabtriebswelle gekoppelt sind, und unter den Häckseleinheiten solche, die zu der ersten Seitenwand benachbart sind, mit einer gemeinsamen ersten Häckselabtriebswelle gekoppelt sind, und solche, die zu der zweiten Seitenwand benachbart sind, mit einer gemeinsamen zweiten Häckselabtriebswelle gekoppelt sind. Indem so Pflücker- und Häckselabtriebswellen von zwei Seiten des Maispflückers her angetrieben werden, wird das von jeder einzelnen Abtriebswelle zu übertragende Drehmoment reduziert; infolge von dementsprechend geringeren Anforderungen an die Torsionssteifigkeit der Abtriebswellen und der sie tragenden Strukturen kann das Gewicht des Maispflückers niedrig gehalten werden. Maispflückermodelle von verringerter Arbeitsbreite sind einfach und kostengünstig realisierbar, indem Komponenten, anstatt ihre Gestalt zu variieren, einfach weggelassen werden können.

Einander zugewandte Enden der ersten und zweiten Pflückerabtriebswelle und/oder einander zugewandte Enden der ersten und zweiten Häckselabtriebswelle sind vorzugsweise durch einen Zwischenraum voneinander beabstandet. So kann, bei einem Modell mit verringerter Arbeitsbreite nicht nur eine zum Antreiben der Abtriebswellen von der Seitenwand her nicht benötigte Getriebeeinheit weggelassen werden, sondern auch gleich jeweils eine der Pflücker- und/oder Häckselabtriebswellen.

Erfindungsgemäß bilden die erste Pflückerabtriebswelle und die erste Häckselabtriebswelle eine Abtriebsseite einer ersten Getriebeeinheit, und die zweite Pflückerabtriebswelle und die zweite Häckselabtriebswelle bilden eine Abtriebsseite einer zweiten Getriebeeinheit, die von der ersten Getriebeeinheit verschieden ist.

Die Getriebeeinheiten können jeweils platzsparend in der ersten bzw. der zweiten Seitenwand untergebracht sein.

Jede Getriebeeinheit umfasst eine Antriebswelle und zwei Hauptwellen, von denen eine erste mit einer der Pflückerabtriebswellen trieblich verbunden ist und die zweite mit einer der Häckselabtriebswellen trieblich verbunden ist. Dadurch, dass die Antriebswelle und die zwei Hauptwellen in einer gemeinsamen, insbesondere vertikalen, Ebene verlaufen, ist eine platzsparende Unterbringung der Getriebeeinheiten in den Seitenwänden des Maispflückers möglich.

Um unterschiedliche Drehzahlverhältnisse zwischen Pflück- und Häckseleinheiten zu ermöglichen, kann zwischen der Antriebswelle und einer der Hauptwellen, vorzugsweise der ersten Hauptwelle, ein Stufengetriebe vorgesehen sein.

Um die unterschiedlichen Schaltstufen in einem kompakten Bauraum zu realisieren, kann das Stufengetriebe mehrere Räderpaare mit miteinander kämmenden Rädern umfassen. Um den Drehmomentfluss über eines der Räderpaare selektiv zu erlauben bzw. zu unterbinden, kann von den Rädern jedes Räderpaars jeweils wenigstens eines zwischen einem mit der es tragenden Welle drehfest gekoppelten Zustand und einem gegen die Welle drehbaren Zustand umschaltbar sein.

Wenn das Stufengetriebe eine Vorgelegewelle umfasst, können die Räderpaare jeweils ein erstes von der Vorgelegewelle getragenes Rad aufweisen, während zweite Räder der Räderpaare auf die Antriebswelle und die eine Hauptwelle verteilt sind. Die Drehmomentübertragung kann dann in zwei Schritten, von der Antriebswelle zur Vorgelegewelle und von dieser zur Hauptwelle erfolgen. Die Zweistufigkeit ermöglicht stark variierende Übersetzungsverhältnisse bei geringen Durchmesserunterschieden zwischen den Rädern jedes Paars, was wiederum eine kompakte Bauform des Getriebes ermöglicht. Vorzugsweise sind je zwei Räderpaare mit auf die Antriebswelle und die Vorgelegewelle bzw. auf die Vorgelegewelle und die eine Hauptwelle verteilten Rädern vorgesehen, so dass das Stufengetriebe ein Vierganggetriebe bildet.

Für eine kompakte Bauform des Getriebes und insbesondere seine platzsparende Unterbringung in eine Seitenwand des Maispflückers ist es ferner nützlich, dass die Vorgelegewelle in der Ebene der Antriebs- und Hauptwellen verläuft und/oder die Antriebswelle und die eine Hauptwelle koaxial verlaufen.

Ein Übersetzungsverhältnis des Stufengetriebes sollte elektrisch und/oder hydraulisch fernsteuerbar sein, um eine Festlegung des Übersetzungsverhältnisses von einer Fahrerkanzel einer mit dem Maispflücker ausgestatteten Landmaschine aus, vorzugsweise bei fahrender Maschine im laufenden Erntebetrieb, zu ermöglichen.

Zu diesem Zweck kann eine Kupplung an einer Welle zwischen zwei Rädern verschiedener Räderpaare angeordnet und zwischen zwei Stellungen verstellbar sein, in denen sie jeweils eines der benachbarten Räder drehfest an die Welle kuppelt. Vorzugsweise ist diese Welle die Vorgelegewelle. Die Nutzbarkeit einer gleichen Kupplung für zwei Radpaare trägt ebenfalls zur Kompaktheit des Getriebes und zu günstigen Fertigungskosten bei.

Um den Betrieb einer der Einheiten, typischerweise der Häckseleinheit, bei Nichtbedarf unterbinden zu können, kann deren Hauptwelle von der Antriebswelle abkoppelbar sein. Wenn mehrere Reiheneinheiten über das Stufengetriebe angetrieben sind, brauchen deren Häckseleinheiten nicht einzeln geschaltet zu werden, sondern können durch Abkoppeln ihrer gemeinsamen Hauptwelle alle auf einen Schlag deaktiviert werden.

Wenn wenigstens eine der Hauptwellen, optional die zweite Hauptwelle, mit der Antriebswelle über eine Zwischenwelle gekoppelt ist, kann eine solche Abkopplung durch ein Schwenken der Zwischenwelle erfolgen, bei der ein Rad der Zwischenwelle von der einen Hauptwelle abgerückt und dadurch die Kraftübertragung zwischen der Zwischenwelle und der einen Hauptwelle unterbrochen wird. Indem die Schwenkbewegung auf einer zur anderen Hauptwelle koaxiale Bahn erfolgt, kann der Kraftschluss zwischen der anderen Hauptwelle und der Zwischenwelle bestehen bleiben.

Wenn in einem Räderpaar, das die Zwischenwelle an die andere Hauptwelle koppelt, wenigstens ein Rad austauschbar ist, kann durch einen solchen Austausch das Übersetzungsverhältnis zwischen der Antriebswelle und der Hauptwelle modifiziert werden. Insbesondere wenn die Zwischenwelle wie oben erwähnt schwenkbar ist, genügt es zum Verändern des Übersetzungsverhältnisses, ein einziges Rad auszutauschen.

Gegenstand der Erfindung ist ferner eine Landmaschine mit einer fahrbaren Basiseinheit und einem Maispflücker wie oben beschrieben, bei der die Basiseinheit einen ersten Abtriebsanschluss, an den die erste Pflückerabtriebswelle und die erste Häckselabtriebswelle gekoppelt sind, und einen zweiten Abtriebsanschluss, an den die zweite Pflückerabtriebswelle und die zweite Häckselabtriebswelle gekoppelt sind, umfasst, und bei der optional Geschwindigkeiten des ersten und des zweiten Abtriebsanschlusses unterschiedlich einstellbar sind.

Weitere Merkmale und Vorteile der Erfindung ergeben sich aus der nachfolgenden Beschreibung von Ausführungsbeispielen unter Bezugnahme auf die beigefügten Figuren. Es zeigen:
- Fig. 1: eine schematische Seitenansicht eines erfindungsgemäßen Maispflückers, montiert an einem Mähdrescher;
- Fig. 2: den Maispflücker in einer perspektivischen Ansicht schräg von hinten;
- Fig. 3: ein Getriebe des Maispflückers;
- Fig. 4: eine schematische Draufsicht auf ein erfindungsgemäßes erstes Modell des Maispflückers; und
- Fig. 5: eine schematische Draufsicht auf ein aus dem ersten Modell ableitbares, allerdings nicht erfindungsgemäßes zweites Modell des Maispflückers.

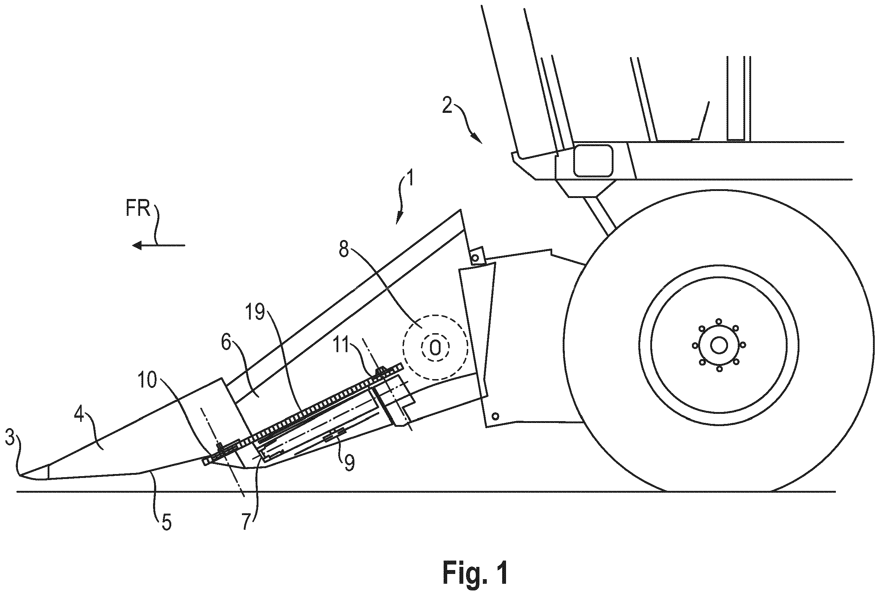

Fig. 1 zeigt schematisch eine Landmaschine, hier einen Mähdrescher, mit einer fahrbaren Basiseinheit 2 und einem vorn an der nur zum Teil gezeigten Basiseinheit 2 montierten Maispflücker 1. Entlang einer Vorderkante des Maispflückers 1 ist eine Reihe von sich jeweils von einer vorderen Spitze 3 aus nach hinten ähnlich einem halben Kegel verbreiternden Führungshauben 4 angeordnet. Seitliche Flanken 5 von benachbarten Führungshauben 4 begrenzen jeweils einen sich nach hinten verengenden Gutannahmebereich, in den, wenn der Mähdrescher in einer Fahrtrichtung FR entlang von Reihen eines Maisbestands auf einem Feld fährt, um den Mais zu ernten, die Maisstängel einer nach dem anderen einrücken, um bei Erreichen des hinteren Endes des Gutannahmebereich geschnitten und von zwischen Umlenkrollen 10, 11 umlaufenden endlosen Förderketten 19 in einen Pflückspalt zwischen zwei Pflückwalzen 7 hineingeschoben zu werden.

Die Pflückwalzen 7 sind gegenläufig drehangetrieben, um die Stängel durch den Pflückspalt hindurch nach unten zu ziehen und dabei daranhängende Kolben an den Kanten von Pflückplatten abzustreifen, die sich beiderseits des Pflückspalts zwischen den Förderketten 19 darüber und den Pflückwalzen 7 darunter erstrecken. Die zwei Pflückplatten und Pflückwalzen, die jeweils einen Pflückspalt begrenzen, bilden eine Pflückeinheit.

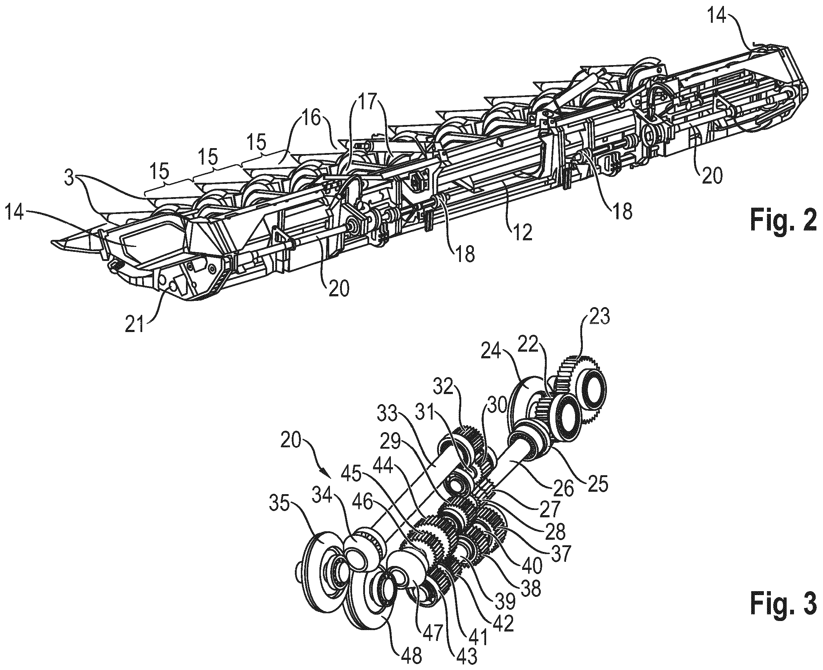

Zum Pflückspalt hin abschüssige Wandplatten 6 halten die abgestreiften Kolben in der Reichweite der Förderketten 19, so dass die abgestreiften Kolben von den Förderketten 19 weiter nach hinten bis in den Erfassungsbereich einer sich quer zur Fahrtrichtung FR erstreckenden Förderschnecke 8 geschoben werden. Die Förderschnecke 8 ist drehangetrieben, um die Kolben bis vor einen Auslass 12 (s. Fig. 2 ) in der Mitte einer Rückwand 13 des Maispflückers 1 zu schieben, von wo sie zu einem Dreschwerk im Innern der Basiseinheit 2 weitergefördert werden.

Während die Stängel den Pflückspalt nach unten durchlaufen, werden sie von einer unter den Pflückwalzen 7 angeordneten Häckseleinheit 9 mit rotierenden Messern zerkleinert, und das erhaltene Häckselgut wird auf dem Feld verstreut.

Fig. 2 zeigt den Maispflücker 1 in einer Ansicht schräg von hinten. Man erkennt den Auslass 12 in der Mitte der Rückwand 13, die Reihe der Spitzen 3 entlang einer Vorderkante des Maispflückers 1 sowie von den Enden der Rückwand 13 aus in der Fahrtrichtung nach vorn verlaufende Seitenwände 14. Zwischen zwei Spitzen 3 liegt jeweils eine Reiheneinheit 15 mit je einem sich nach hinten verengenden Erfassungsbereich 16, der daran anschließenden Pflückeinheit 17 und der unter dem Maispflücker 1 verborgenen Häckseleinheit 9.

Beiderseits des Auslasses 12 sind an der Rückwand 13 Antriebsanschlüsse 18 angeordnet, die, wenn der Maispflücker 1 an der Basiseinheit 2 montiert ist, über jeweils einen Abtriebsanschluss 18 auf Seiten der Basiseinheit 1 mit einem Motor der Basiseinheit trieblich verbunden sind. Jeder Antriebsanschluss 18 ist über eine quer zur Fahrtrichtung FR ausgerichtete Welle 20 mit einer Getriebeeinheit 21 in einer der Seitenwände 14 verbunden. Die Breite des Maispflückers 1 - und damit auch die Länge der Wellen 20 - kann von einem Modell zum anderen variieren; indem Abmessungen des Auslasses 12 und die Platzierung der Antriebsanschlüsse 18 für alle Modelle einheitlich sind, ist sichergestellt, dass unterschiedlich breite Modelle des Maispflückers 1 an einer gleichen Basiseinheit 2 verwendet werden können.

Fig. 3 zeigt eine der in den Seitenwänden 14 verborgenen Getriebeeinheiten 21 in einer perspektivischen Ansicht schräg von vorn. Die Welle 20 trägt an ihrem äußeren Ende ein Rad 23, das über ein mit ihm kämmendes Rad 22 und ein mit letzterem drehfest verbundenes Kegelrad 24 ein Kegelrad 25 an einer Antriebswelle 26 der Getriebeeinheit 21 antreibt.

Weitere Räder 27, 28, 29 sind drehfest an der Antriebswelle 26 montiert. Das Rad 27 kämmt mit einem Rad 30 an einer Zwischenwelle 31. Ein angetriebenes Rad 32 an einer Hauptwelle 33 kann unmittelbar mit dem Rad 30 kämmen. Einer zweckmäßigen Variante zufolge ist das Rad 32 austauschbar, und die Zwischenwelle 31 ist auf einer kreisbogenförmigen Bahn, deren Mittelpunkt auf der Achse der Antriebswelle 26 liegt, an verschiedenen Stellen arretierbar, so dass das Rad 30 mit einem als Ersatz für das Rad 32 an der Hauptwelle 33 montierten Rad von anderem Durchmesser in Eingriff gebracht werden kann. So sind unterschiedliche Übersetzungsverhältnisse zwischen der Antriebswelle 25 und der Hauptwelle 33 realisierbar. Die Zwischenwelle 31 kann auf der kreisbogenförmigen Bahn auch in eine Stellung gebracht werden, in der die Räder 30, 32 außer Eingriff sind, um die Drehmomentübertragung zur Hauptwelle 33 zu unterbrechen.

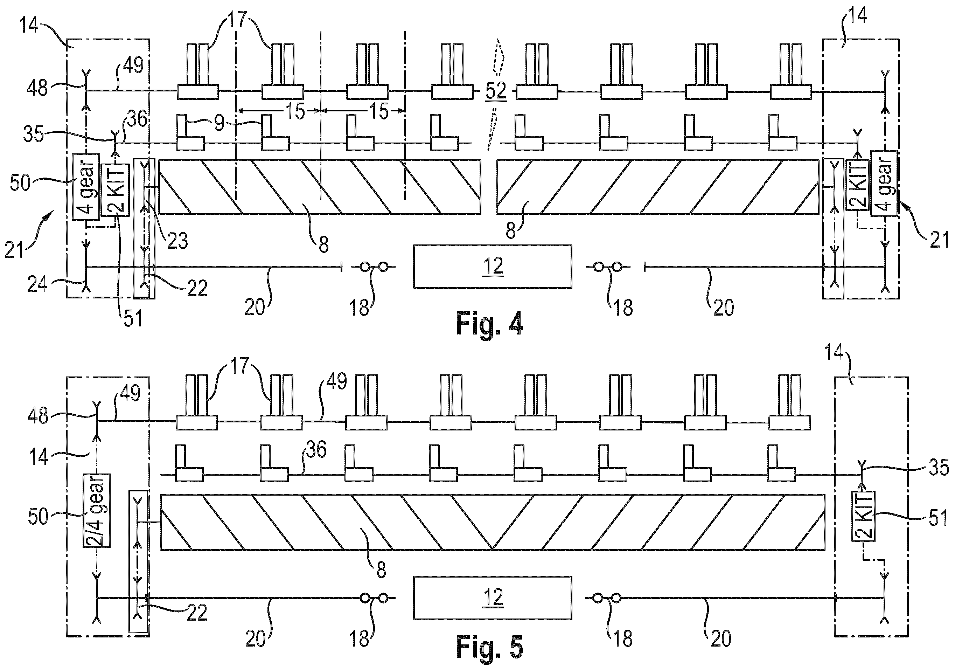

Die Hauptwelle 33 treibt Häckseleinheiten 9 über ein Paar Kegelräder 34, 35 und eine in Breitenrichtung des Maispflückers 1 verlaufende Häckselabtriebswelle 36 (s. Fig. 4 ).

Die Räder 28, 29 haben unterschiedliche Durchmesser und kämmen jeweils mit einem komplementären Rad 37 bzw. 38 an einer Vorgelegewelle 39. Über eine zwischen den Rädern 37, 38 angeordnete Synchronisiereinrichtung 40 ist jeweils eines der Räder 37, 38 drehfest mit der Vorgelegewelle 39 koppelbar, so dass zwei unterschiedliche Übersetzungsverhältnisse zwischen der Antriebswelle 26 und der Vorgelegewelle 39 realisierbar sind.

Die Vorgelegewelle 39 trägt zwei weitere durch eine zwischen ihnen angeordnete Kupplung 40, 41 oder Synchronisiereinrichtung selektiv drehfest ankoppelbare Räder 42, 43. Letztere kämmen mit Rädern 44, 45 an einer Hauptwelle 46, die über Kegelräder 47, 48 und eine Pflückerabtriebswelle 49 (s. Fig. 4 ) Pflückeinheiten 17 antreibt. Den vier verschiedenen Kombinationen von Stellungen der Kupplungen 40, 41 bzw. Synchronisiereinrichtungen entsprechen vier verschiedene Übersetzungsverhältnisse zwischen der Antriebswelle 26 und der Hauptwelle 46.

Die Kupplungen 40, 41 sind entlang der Vorgelegewelle 39 mit Hilfe von an sich bekannten, in den Figuren nicht dargestellten Stellgliedern verstellbar. Diese können von einer Fahrerkabine der Basiseinheit 2 aus elektrisch und/oder hydraulisch steuerbar sein. So kann ein Fahrer das Übersetzungsverhältnis im laufenden Betrieb, während der Fahrt, ändern. Alternativ oder ergänzend kann eine Möglichkeit vorgesehen sein, die Stellglieder mittels am Maispflücker 1 selber angebrachter Bedienelemente zu betätigen.

Die Hauptwelle 46 erstreckt sich in axialer Verlängerung der Antriebswelle 26. Die Wellen 26, 33, 39 und 46 liegen in einer gleichen vertikalen, zur Fahrtrichtung FR parallelen Ebene. Der Abstand der Zwischenwelle 31 von dieser Ebene kann je nach Durchmesser des Rades 32 variieren, ist aber klein sein im Verhältnis zum Abstand der Wellen 26, 33, 39 und 46 in vertikaler Richtung und trägt daher zum Platzbedarf der Getriebeeinheit 21 nicht nennenswert bei.

Fig. 4 zeigt ein Modell des Maispflückers 1 in einer schematischen Draufsicht. Gezeigt sind der Auslass 12 mit den beiderseits davon angeordneten Antriebsanschlüssen 18 und den sich von dort zu den Getriebeeinheiten 21 in beiden Seitenwänden des Maispflückers 1 erstreckenden Wellen 20. Jede Getriebeeinheit 21 treibt die Förderschnecke 8 von einem ihrer seitlichen Enden aus über das Rad 23, die Pflückerabtriebswelle 49 über eine Untereinheit 50 der Getriebeeinheit 21, die die Vorgelegewelle 39 und die Hauptwelle 46 umfasst, und die Häckselabtriebswelle 36 über eine Untereinheit 51, die die Zwischenwelle 31 und die Hauptwelle 33 umfasst.

Zum Toleranzausgleich zwischen den Getriebeeinheiten 21 und den Abtriebswellen 36, 39 kann jeweils eine Ausgleichskupplung wie etwa eine Bogenzahnkupplung zwischen dem Kegelrad 35 oder 48 und der darüber angetriebenen Abtriebswelle 36 bzw. 49 vorgesehen sein.

Die Förderschnecke 8, die Pflückerabtriebswelle 49 und die Häckselabtriebswelle 36 können sich über die gesamte Breite des Maispflückers 1 erstrecken; indem sie von zwei Seiten her angetrieben werden, ist eine große Breite des Maispflückers 1 von z. B. 16 oder 18 Reiheneinheiten 15 realisierbar. Alternativ können sie, wie in Fig. 4 dargestellt, jeweils durch einen Zwischenraum 52 in eine linke Förderschnecke 8, Pflückerabtriebswelle 49 und Häckselabtriebswelle 36, angetrieben von der Getriebeeinheit 21 der linken Seitenwand, und eine rechte Förderschnecke 8, Pflückerabtriebswelle 49 und Häckselabtriebswelle 36, angetrieben von der Getriebeeinheit 21 der rechten Seitenwand unterteilt sein; auch so , ist eine große Breite des Maispflückers 1 realisierbar, außerdem können die linken und rechten Abtriebswellen 49, 36, da sie jeweils über einen eigenen Antriebsanschluss 18 angetrieben sind, von der Basiseinheit 2 mit unterschiedlichen Drehzahlen angetrieben werden.

Die Aufteilung der Getriebeeinheit 21 in Untereinheiten 50, 51 hat ferner den Vorteil, dass in einem Maispflücker für einen Kunden, der keine Häckselfunktion benötigt, zusammen mit den Häckseleinheiten 9 auch die Untereinheit 51 einfach weggelassen und ein solcher Maispflücker kostengünstig bereitgestellt werden kann.

Um ein Maispflückermodell von geringerer Breite zu schaffen, kann es ausreichen, nur die linke oder nur die rechte Pflückerabtriebswelle 49 und Häckselabtriebswelle 36 mit den zugehörigen Pflück- und Häckseleinheiten 17, 9 und einer einzigen Antriebseinheit 21 in einen Rahmen einzusetzen, in dem der Abstand zwischen den Seitenwänden 14 um die Länge der weggelassenen Abtriebswellen vermindert ist.

Typischerweise sind die rechten und linken Abtriebswellen 49 und 36 jeweils gleich lang, um die Zahl von für den Zusammenbau des Maispflückers der Fig 4 benötigten unterschiedlichen Komponenten zu minimieren, und die Arbeitsbreite des aus dem Maispflücker der Fig 4 abgeleiteten Modells nach Fig. 5 beträgt die Hälfte der Arbeitsbreite des Maispflückers der Fig. 4 . Denkbar ist aber auch, rechts und links in Fig. 4 jeweils Abtriebswellen 49, 36 in unterschiedlichen Längen und mit unterschiedlichen Zahlen von angetriebenen Pflück- und Häckseleinheiten zu verwenden, so dass aus dem Maispflücker der Fig 4 zwei unterschiedlich breite Modelle nach Fig. 5 abgeleitet werden können, je nachdem, ob die längeren oder die kürzeren Abtriebswellen beibehalten werden.

Eine andere Ausgestaltung eines Maispflückers von verminderter Breite ist in Fig. 5 gezeigt. Anstatt in einer der Seitenwände 14 die dortige der Getriebeeinheit 21 komplett wegzulassen, sind in der Getriebeeinheit der linken Seitenwand die Untereinheit 51, und in der der rechten Seitenwand 14 die Untereinheit 50 sowie die Räder 22, 23 zum Antreiben der Förderschnecke 8 weggelassen. Die auf der linken Seite verbleibenden Räder 22, 23 und die Untereinheit 50 treiben die Förderschnecke 8 und die Plückerabtriebswelle48; die Untereinheit 51 auf der rechten Seite die Häckselabtriebswelle 36 so dass die Pflückeinheiten 17 jeweils von einer Seite aus und die Häckseleinheiten 9 von der anderen Seite aus angetrieben werden. So wird eine ausgeglichenere Gewichtsverteilung erreicht, was die Höhenregelung des Maispflückers 1 erleichtert und somit letztlich eine höhere Arbeitsgeschwindigkeit erlaubt. Da keine anderen Komponenten benötigt werden als für den Maispflücker 1 der Fig. 4 , ist auch diese Variante kostengünstig realisierbar.

### Bezugszeichen

- 1: Maispflücker
- 2: Basiseinheit
- 3: Spitze
- 4: Führungshaube
- 5: Flanke
- 6: Wandplatte
- 7: Pflückwalze
- 8: Förderschnecke
- 9: Häckseleinheit
- 10: Umlenkrolle
- 11: Umlenkrolle
- 12: Auslass
- 13: Rückwand
- 14: Seitenwand
- 15: Reiheneinheit
- 16: Erfassungsbereich
- 17: Pflückeinheit
- 18: Antriebsanschluss
- 19: Förderkette
- 20: Welle
- 21: Getriebeeinheit
- 22: Rad
- 23: Rad
- 24: Kegelrad
- 25: Kegelrad
- 26: Antriebswelle
- 27: Rad
- 28: Rad
- 29: Rad
- 30: Rad
- 31: Zwischenwelle
- 32: Rad
- 33: Hauptwelle
- 34: Kegelrad
- 35: Kegelrad
- 36: Häckselabtriebswelle
- 37: Rad
- 38: Rad
- 39: Vorgelegewelle
- 40: Kupplung
- 41: Kupplung
- 42: Rad
- 43: Rad
- 44: Rad
- 45: Rad
- 46: Hauptwelle
- 47: Kegelrad
- 48: Kegelrad
- 49: Pflückerabtriebswelle
- 50: Untereinheit
- 51: Untereinheit
- 52: Zwischenraum

## Patentansprüche

1. Maispflücker (1) mit mehreren zwischen einer ersten Seitenwand (14) und einer gegenüberliegenden zweiten Seitenwand (14) des Maispflückers (1) verteilten Reiheneinheiten (15), wobei jede Reiheneinheit (15) eine Pflückeinheit (17), in der zwei Pflückwalzen (7) einen Pflückspalt begrenzen, und eine Häckseleinheit (9) umfasst, die unter der Pflückeinheit (17) angeordnet ist, um einen durch den Pflückspalt hindurchgezogenen Halm zu häckseln,
wobei unter den Pflückeinheiten (17) solche, die zu der ersten Seitenwand (14) benachbart sind, mit einer gemeinsamen ersten Pflückerabtriebswelle (49) gekoppelt sind, und solche, die zu der zweiten Seitenwand (14) benachbart sind, mit einer gemeinsamen zweiten Pflückerabtriebswelle (49) gekoppelt sind, und dass unter den Häckseleinheiten (9) solche, die zu der ersten Seitenwand (14) benachbart sind, mit einer gemeinsamen ersten Häckselabtriebswelle (36) gekoppelt sind, und solche, die zu der zweiten Seitenwand (14) benachbart sind, mit einer gemeinsamen zweiten Häckselabtriebswelle (36) gekoppelt sind,
wobei die erste Pflückerabtriebswelle (49) und die erste Häckselabtriebswelle (36) eine Abtriebsseite einer ersten Getriebeeinheit (21) bilden, und die zweite Pflückerabtriebswelle (49) und die zweite Häckselabtriebswelle (36) eine Abtriebsseite einer zweiten Getriebeeinheit (21) bilden, die von der ersten Getriebeeinheit (21) verschieden ist
**dadurch gekennzeichnet, dass**
dass jede Getriebeeinheit (21) eine Antriebswelle (26) und zwei Hauptwellen (33, 46) umfasst, von denen eine erste (46) mit einer der Pflückerabtriebswellen (49) trieblich verbunden ist und die zweite (33) mit einer der Häckselabtriebswellen (36) trieblich verbunden ist, und dass die Antriebswelle (26) und die zwei Hauptwellen (33, 46) in einer gemeinsamen, insbesondere vertikalen, Ebene verlaufen.

2. Maispflücker nach Anspruch 1, **dadurch gekennzeichnet, dass** einander zugewandte Enden der ersten und zweiten Pflückerabtriebswelle (49) und/oder einander zugewandte Enden der ersten und zweiten Häckselabtriebswelle (36) durch einen Zwischenraum (52) voneinander beabstandet sind.

3. Maispflücker nach Anspruch 1 oder 2, **dadurch gekennzeichnet, dass** die erste Getriebeeinheit (21) in der ersten Seitenwand (14) und die zweite Getriebeeinheit (21) in der zweiten Seitenwand (14) untergebracht ist.

4. Maispflücker nach einem der vorangegangenen Ansprüche, **dadurch gekennzeichnet, dass** wenigstens eine der Hauptwellen (46, 33), optional die erste Hauptwelle (46), mit der Antriebswelle (26) über ein Stufengetriebe verbunden ist.

5. Maispflücker nach Anspruch 4, **dadurch gekennzeichnet, dass** das Stufengetriebe mehrere Räderpaare mit miteinander kämmenden Rädern (28, 37; 29, 38; 42, 44; 43, 45) umfasst, wobei von den Rädern (28, 37; 29, 38; 42, 44; 43, 45) jedes Räderpaars jeweils wenigstens eines (37, 38, 42, 43) zwischen einem mit der es tragenden Welle (39) drehfest gekoppelten Zustand und einem gegen die Welle (39) drehbaren Zustand umschaltbar ist.

6. Maispflücker nach Anspruch 5, **dadurch gekennzeichnet, dass** das Stufengetriebe eine Vorgelegewelle (39) umfasst und dass die Räderpaare jeweils ein erstes von der Vorgelegewelle (39 getragenes Rad (37, 38, 42, 43) aufweisen und zweite Räder (28, 29, 44, 45) der Räderpaare auf die Antriebswelle (26) und die eine Hauptwelle (46) verteilt sind.

7. Maispflücker nach Anspruch 6, **dadurch gekennzeichnet, dass** die Vorgelegewelle (39) in der Ebene der Antriebs- und Hauptwellen (26, 46, 43) verläuft und/oder die Antriebswelle (26) und die eine Hauptwelle (46) koaxial verlaufen.

8. Maispflücker nach einem der Ansprüche 4 bis 7, **dadurch gekennzeichnet, dass** ein Übersetzungsverhältnis des Stufengetriebes elektrisch und/oder hydraulisch fernsteuerbar ist.

9. Maispflücker nach einem der Ansprüche 5 bis 8, **dadurch gekennzeichnet, dass** eine Kupplung (40, 41) an einer Welle (39) zwischen zwei Rädern (37, 38; 42, 43) verschiedener Räderpaare angeordnet und zwischen zwei Stellungen verstellbar ist, in denen sie jeweils eines der benachbarten Räder (37, 38; 42, 43) drehfest an die Welle (39) kuppelt.

10. Maispflücker nach einem der vorangegangenen Ansprüche , **dadurch gekennzeichnet, dass** wenigstens eine andere der Hauptwellen, optional die zweite Hauptwelle, (33) von der Antriebswelle (26) abkoppelbar ist.

11. Maispflücker nach einem der vorangegangenen Ansprüche, **dadurch gekennzeichnet, dass** wenigstens eine andere der Hauptwellen, optional die zweite Hauptwelle (33), mit der Antriebswelle (26) über eine Zwischenwelle (31) gekoppelt ist, wobei in einem Räderpaar (30, 32), das die Zwischenwelle (31) an die andere Hauptwelle (33) koppelt, wenigstens ein Rad (32) austauschbar ist.

12. Landmaschine mit einer fahrbaren Basiseinheit (2) und einem Maispflücker (1) nach einem der vorhergehenden Ansprüche, bei der die Basiseinheit (2) einen ersten Abtriebsanschluss, an den die erste Pflückerabtriebswelle und die erste Häckselabtriebswelle gekoppelt sind, und einen zweiten Abtriebsanschluss, an den die zweite Pflückerabtriebswelle und die zweite Häckselabtriebswelle gekoppelt sind, umfasst, und bei der optional Geschwindigkeiten des ersten und des zweiten Abtriebsanschlusses unterschiedlich einstellbar sind.

## Claims

1. Corn picker (1) with a plurality of row units (15) distributed between a first side wall (14) and an opposite second side wall (14) of the corn picker (1), wherein each row unit (15) has a picking unit (17), in which two picking rollers (7) delimit a picking gap, and comprises a chopper unit (9) which is arranged below the picking unit (17) to chop a stalk which is drawn through the picking gap,
wherein, below the picking units (17), those adjacent to the first side wall (14) are coupled to a common first picker output shaft (49), and those adjacent to the second side wall (14) are coupled to a common second picker output shaft (49), and wherein, below the chopper units (9), those adjacent to the first side wall (14) are coupled to a common first chopper output shaft (36), and those adjacent to the second side wall (14) are coupled to a common second chopper output shaft (36),
wherein the first picker output shaft (49) and the first chopper output shaft (36) form an output side of a first gear unit (21), and the second picker output shaft (49) and the second chopper output shaft (36) form an output side of a second gear unit (21) which is different from the first gear unit (21),
**characterized in that**
each gear unit (21) comprises a drive shaft (26) and two main shafts (33, 46), a first one (46) of which is drive-connected to one of the picker output shafts (49) and the second one (33) of which is drive-connected to one of the chopper output shafts (36), and **in that** the drive shaft (26) and the two main shafts (33, 46) run in a common, in particular vertical, plane.

2. Corn picker according to Claim 1, **characterized in that** mutually facing ends of the first and second picker output shaft (49) and/or mutually facing ends of the first and second chopper output shaft (36) are spaced apart from each other by an intermediate space (52).

3. Corn picker according to Claim 1 or 2, **characterized in that** the first gear unit (21) is accommodated in the first side wall (14) and the second gear unit (21) is accommodated in the second side wall (14).

4. Corn picker according to any one of the preceding claims, **characterized in that** at least one of the main shafts (46, 33), optionally the first main shaft (46), is connected to the drive shaft (26) via a multi-step gear.

5. Corn picker according to Claim 4, **characterized in that** the multi-step gear comprises a plurality of wheel pairs with intermeshing wheels (28, 37; 29, 38; 42, 44; 43, 45), wherein, of the wheels (28, 37; 29, 38; 42, 44; 43, 45) of each wheel pair, at least one (37, 38, 42, 43) can be switched between a state, in which it is coupled fixedly to the shaft (39) carrying it for conjoint rotation, and a state, in which it can be rotated with respect to the shaft (39).

6. Corn picker according to Claim 5, **characterized in that** the multi-step gear comprises a countershaft (39), and **in that** the wheel pairs each have a first wheel (37, 38, 42, 43) carried by the countershaft (39), and second wheels (28, 29, 44, 45) of the wheel pairs are distributed to the drive shaft (26) and the one main shaft (46).

7. Corn picker according to Claim 6, **characterized in that** the countershaft (39) runs in the plane of the drive and main shafts (26, 46, 43), and/or the drive shaft (26) and the one main shaft (46) run coaxially.

8. Corn picker according to any one of Claims 4 to 7, **characterized in that** a transmission ratio of the multi-step gear can be remote controlled electrically and/or hydraulically.

9. Corn picker according to any one of Claims 5 to 8, **characterized in that** a coupling (40, 41) is arranged on a shaft (39) between two wheels (37, 38; 42, 43) of different wheel pairs and is adjustable between two positions, in which it couples in each case one of the adjacent wheels (37, 38; 42, 43) fixedly to the shaft (39) for conjoint rotation.

10. Corn picker according to any one of the preceding claims, **characterized in that** at least another one of the main shafts, optionally the second main shaft (33), can be decoupled from the drive shaft (26).

11. Corn picker according to any one of the preceding claims, **characterized in that** at least another one of the main shafts, optionally the second main shaft (33), is coupled to the drive shaft (26) via an intermediate shaft (31), wherein at least one wheel (32) is exchangeable in a wheel pair (30, 32) which couples the intermediate shaft (31) to the other main shaft (33).

12. Agricultural machine with a mobile base unit (2) and a corn picker (1) according to any one of the preceding claims, in which agricultural machine the base unit (2) comprises a first output connector, to which the first picker output shaft and the first chopper output shaft are coupled, and a second output connector, to which the second picker output shaft and the second chopper output shaft are coupled, and in which agricultural machine the speeds of the first and second output connector can optionally be adjusted differently.

## Revendications

1. Cueilleur à maïs (1) comprenant plusieurs unités de rangées (15) réparties entre une première paroi latérale (14) et une deuxième paroi latérale (14) du cueilleur à mais (1) situées en vis-à-vis l'une de l'autre, chaque unité de rangée (15) comportant une unité de cueillage (17), dans laquelle deux cylindres de cueillage (7) délimitent un canal de cueillage, et une unité de hachage (9) die est disposée sous l'unité de cueillage (17) aux fins de hacher une tige qui est tirée à travers le canal de cueillage,
sachant que parmi les unités de cueillage (17), celles qui sont adjacentes à la première paroi latérale (14) sont couplées à un premier arbre de sortie de cueilleur (49) commun, et celles qui sont adjacentes à la deuxième paroi latérale (14) sont couplées à un deuxième arbre de sortie de cueilleur (49) commun, et que parmi les unités de hachage (9), celles qui sont adjacentes à la première paroi latérale (14) sont couplées à un premier arbre de sortie de hachage (36) commun, et celles qui sont adjacentes à la deuxième paroi latérale (14) sont couplées à un deuxième arbre de sortie de hachage (36) commun,
le premier arbre de sortie de cueilleur (49) et le premier arbre de sortie de hachage (36) constituant un côté sortie d'une première unité de transmission (21), et le deuxième arbre de sortie de cueilleur (49) et le deuxième arbre de sortie de hachage (36) constituant un côté sortie d'une deuxième unité de transmission (21) qui est différente de la première unité de transmission (21),
**caractérisé en ce que**
chaque unité de transmission (21) comporte un arbre d'entraînement (26) et deux arbres principaux (33, 46) dont un premier (46) est en liaison motrice avec l'un des arbres de sortie de cueilleur (49), et le deuxième (33) est en liaison motrice avec l'un des arbres de sortie de hachage (36), et **en ce que** l'arbre d'entraînement (26) et les deux arbres principaux (33, 46) s'étendent dans un plan commun, en particulier vertical.

2. Cueilleur à maïs (1) selon la revendication 1, **caractérisé en ce que** des extrémités tournées l'une vers l'autre du premier et du deuxième arbre de sortie de cueilleur (49) et/ou des extrémités tournées l'une vers l'autre du premier et du deuxième arbre de sortie de hachage (36) sont espacées l'une de l'autre par un interstice (52).

3. Cueilleur à maïs selon la revendication 1 ou 2, **caractérisé en ce que** la première unité de transmission (21) est installée dans la première paroi latérale (14) et la deuxième unité de transmission (21) dans la deuxième paroi latérale (14).

4. Cueilleur à maïs selon une des revendications précédentes, **caractérisé en ce qu'**au moins un des arbres principaux (46, 33), de manière facultative le premier arbre principal (46), est relié à l'arbre d'entraînement (26) par l'intermédiaire d'une transmission étagée.

5. Cueilleur à maïs selon la revendication 4, **caractérisé en ce que** la transmission étagée comprend plusieurs paires de roues avec des roues (28, 37 ; 29, 38 ; 42, 44 ; 43, 45) engrenant l'une avec l'autre, sachant que parmi les roues (28, 37 ; 29, 38 ; 42, 44 ; 43, 45) de chaque paire de roues, respectivement au moins une (37, 38, 42, 43) peut être commutée entre un état d'accouplement solidaire en rotation avec l'arbre (39) qui la porte et un état permettant sa rotation par rapport à l'arbre (39).

6. Cueilleur à maïs selon la revendication 5, **caractérisé en ce que** la transmission étagée comprend un arbre de renvoi (39), et **en ce que** les paires de roues comportent chacune une première roue (37, 38, 42, 34), portée par l'arbre de renvoi (39), et que les deuxièmes roues (28, 29, 44, 45) des paires de roues sont réparties sur l'arbre d'entraînement (26) et l'arbre principal (46), au nombre d'un.

7. Cueilleur à maïs selon la revendication 6, **caractérisé en ce que** l'arbre de renvoi (39) s'étend dans le plan de l'arbre d'entraînement et de l'arbre principal (26, 46, 43) et/ou que l'arbre d'entraînement (26) et l'arbre principal (46), au nombre d'un, s'étendent de manière coaxiale.

8. Cueilleur à maïs selon une des revendications 4 à 7, **caractérisé en ce qu'**un rapport de transmission de la transmission étagée peut être commandé à distance par voie électrique et/ou hydraulique.

9. Cueilleur à maïs selon une des revendications 5 à 8, **caractérisé en ce qu'**un moyen d'accouplement (40, 41) est disposé sur un arbre (39) entre deux roues (37, 38 ; 42, 43) de paires de roues différentes et peut être déplacé entre deux positions dans lesquelles il accouple respectivement une des roues (37, 38 ; 42, 43) adjacentes de manière solidaire en rotation à l'arbre (39).

10. Cueilleur à maïs selon une des revendications précédentes, **caractérisé en ce qu'**au moins un autre arbre parmi les arbres principaux, de manière facultative le deuxième arbre principal (33), peut être désaccouplé de l'arbre d'entraînement (26).

11. Cueilleur à maïs selon une des revendications précédentes, **caractérisé en ce qu'**au moins un autre arbre parmi les arbres principaux, de manière facultative le deuxième arbre principal (33), est accouplé à l'arbre d'entraînement (26) via un arbre intermédiaire (31), sachant que dans une paire de roues (30, 32) qui accouple l'arbre intermédiaire (31) avec l'autre arbre principal (33), au moins une roue (32) peut être changée.

12. Machine agricole comprenant une unité de base (2) mobile et un cueilleur à maïs (1) selon une des revendications précédentes, dans laquelle l'unité de base (2) présente un premier coupleur de sortie, auquel sont accouplés le premier arbre de sortie de cueilleur et le premier arbre de sortie de hachage, et un deuxième coupleur de sortie auquel sont accouplés le deuxième arbre de sortie de cueilleur et le deuxième arbre de sortie de hachage, et dans laquelle il est possible, de manière facultative, de régler le premier et le deuxième coupleur de sortie à des vitesses différentes.
